# EUROPÄISCHE PATENTSCHRIFT

(11) **EP 2 965 605 B1**
(45) Veröffentlichungstag und Bekanntmachung des Hinweises auf die Patenterteilung: **08.03.2017**
(21) Anmeldenummer: 15401064.9
(22) Anmeldetag: 06.07.2015
(51) Int. Cl.: A01B 73/04

(54) **LANDWIRTSCHAFTLICHES GERÄT**
AGRICULTURAL DEVICE
APPAREIL AGRICOLE

(30) Priorität: 08.07.2014 DE 102014109502
(43) Veröffentlichungstag der Anmeldung: 13.01.2016
(73) Patentinhaber: Amazonen-Werke H. Dreyer GmbH & Co. KG, 49205 Hasbergen (DE)
(72) Erfinder: Andrich, Robert, 04420 Markranstädt (DE)

(56) Entgegenhaltungen:
- DE-A1-102004 031 818
- DE-A1-102006 047 890

## Beschreibung

Die Erfindung betrifft ein landwirtschaftliches Gerät gemäß des Oberbegriffes des Patentanspruches 1.

Ein derartiges landwirtschaftliches Gerät ist in der DE 10 2004 031 818 A1 und der DE-A-10 2006 047 890 beschrieben. Dieses landwirtschaftliche Gerät ist als gezogenes Bodenbearbeitungsgerät ausgebildet. Dieses Bodenbearbeitungsgerät weist einen Tragrahmen auf, an den um in Fahrtrichtung weisende Gelenkachsen aus einer etwa horizontalen Arbeitsstellung in eine etwa vertikale Transportstellung verschwenkbare Trägerbalken der Seitensektionen angeordnet sind. An den Trägerbalken sind Bearbeitungselemente angeordnet. Wenn die an dem Tragrahmen angeordneten Trägerbalken der Seitensektionen sich in vertikaler Ausrichtung in Transportstellung befinden, weisen die inneren Enden der Trägerbalken in dieser Stellung in Richtung der Bodenoberfläche. Wenn das Gerät mit den sich in Transportstellung befindlichen Trägerbalken der Seitensektionen nach Beendigung des Arbeitseinsatzes abgestellt werden soll, wird das Gerät im vorderen Bereich auf zumindest einer Abstellstützen zum Abstellen der Maschine, wenn die Trägerbalken sich in Transportstellung befinden, abgestellt. Die Abstellstützen sind hier an der Zugdeichsel des Gerätes angeordnet. Hierzu wird eine relativ aufwändig ausgestaltete Abstellstütze verwendet. Außerdem muss an der Zugdeichsel eine entsprechende Anordnung vorgesehen werden, an der die Abstellstütze in entsprechender Weise in abnehmbarer und/oder verstellbarer Weise befestigt ist. Die bekannten Abstellstützen sind darüber hinaus teleskopierbar ausgebildet und damit relativ teuer.

Der Erfindung liegt die Aufgabe zu Grunde, eine vereinfachte Anordnung und Ausgestaltung der Abstellstützen zum Abstellen des Gerätes zu schaffen.

Diese Aufgabe wird erfindungsgemäß dadurch gelöst, dass zumindest eine Abstellstütze an dem unteren Ende eines sich in Transportstellung befindlichen Trägerbalkens anordbar ist.

Infolge dieser Maßnahme kann das in Transportstellung eingeklappte Gerät sicher abgestellt werden. Das Gerät kann jeweils einfach auf den an dem sich in Transportstellung befindlichen Trägerbalken angeordneten Stützfuß der Abstellstützen abgestellt werden. Weiterhin ist die Bewegung der Deichsel nicht behindert. Somit kann das Gerät problemlos an dem das Gerät ziehenden Schlepper angekoppelt und abgekoppelt werden. Somit werden die sich bereits in Bodennähe befindlichen Enden der sich in Transportstellung befindlichen Tragbalken in Verbindung mit den daran anzuordnenden und/oder angeordneten Abstellstützen zum sicheren Abstellen des Gerätes in Abstellposition benutzt. Darüber hinaus wird aufgrund der sich gegenüber den Tragbalken zur Maschinenmitte hin versetzt angeordneten Gelenken, um welche die Trägerbalken der Seitensektionen von Arbeitsstellung in Transportstellung verschwenkbar sind, gewährleistet, dass das so abgestellte Gerät gegen ein ungewolltes Aufklappen der Trägerbalken der Seitensektionen, aufgrund nachlassender Hydraulikzylinder zusätzlich ohne weitere Maßnahmen automatisch gesichert ist.

Um die Abstellstützen schnell und einfach an den Trägerbalken anzuordnen oder auch wieder abnehmen zu können, ist vorgesehen, dass die an dem unteren Ende des sich in Transportstellung befindlichen Trägerbalkens anzuordnende Abstellstütze mittels einer Schnellkupplung in abnehmbarer Weise angeordnet ist.

Um die Abstellstützen in Arbeitsstellung der Trägerbalken einfach mit dem Gerät mitführen zu können, ist vorgesehen, dass an dem Tragrahmen eine Halterung angeordnet ist, an welcher die Abstellstütze bei sich in Arbeitsstellung befindlichen Trägerbalken befestigbar ist.

Weitere Einzelheiten der Erfindung sind der Beispielsbeschreibung zu entnehmen. Die Zeichnungen zeigen
- Fig.1: das als Scheibenegge ausgebildete landwirtschaftliche Gerät in Arbeitsstellung und in perspektivischer Ansicht,
- Fig.2: das als Scheibenegge ausgebildete landwirtschaftliches Gerät in Transportstellung und in perspektivischer Ansicht,
- Fig.3: die Anordnung einer der Abstellstützen bei sich in Arbeitsstellung befindlichen Gerät am Rahmen des Gerätes in einer Aufbewahrungsposition in perspektivischer Ansicht, in Teilansicht und vergrößerter Darstellung und
- Fig.4: die Anordnung einer der Abstellstützen bei sich in Transportstellung befindlichen Gerät an dem Boden zugewandten Ende eines Trägerbalkens einer Seitensektion in perspektivischer Ansicht, in Teilansicht und vergrößerter Darstellung.

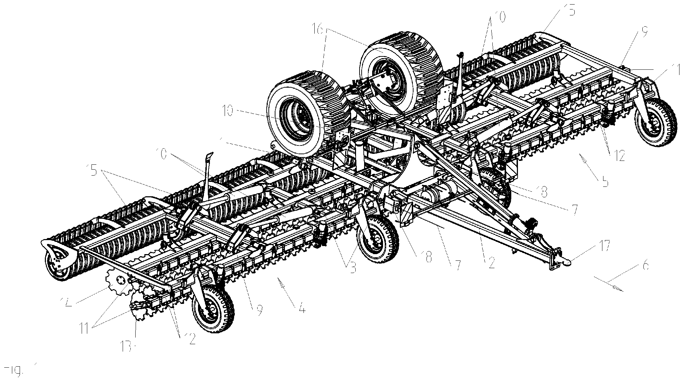

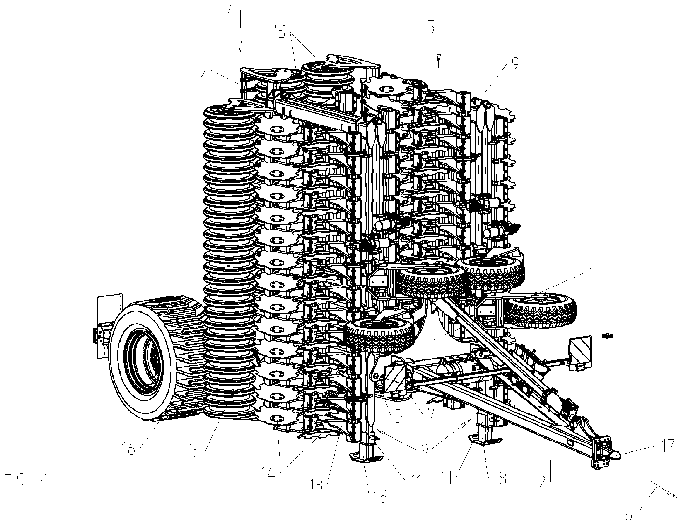

Das als Scheibenegge ausgebildete landwirtschaftliche Gerät weist den Zentralrahmen 1 mit der Zugdeichsel 2 auf. An dem Zentralrahmen 1 sind mittels Gelenken 3 die beiden Seitensektionen 4 und 5 um in Fahrtrichtung 6 verlaufende Schwenkachsen 7 aus der in Fig.1 dargestellten Arbeitsstellung in die in Fig.2 dargestellte Transportstellung schwenkbar angeordnet. Die Seitensektionen 4 und 5 weisen die Tragrahmen 8 und 9 auf. Zwischen dem Tragrahmen 8 und 9 einerseits und dem Zentralrahmen 1 andererseits die Hydraulikzylinder 10 zum Verschwenken der Seitensektionen 4 und 5 aus der Arbeitsposition gemäß Fig.1 in die in Fig.2 dargestellte Transportposition angeordnet. Die Hydraulikzylinder 10 sind mittels nicht dargestellter Hydraulikleitungen mit einer Hydraulikanlage, beispielsweise eines als Scheibenegge ausgebildete Bodenbearbeitungsgerätes ziehenden Ackerschlepper verbunden. An dem Tragrahmen 8 und 9 sind zwei hintereinander und zumindest annähernd parallel zueinander angeordnete quer zur Bewegungsrichtung 6 der Scheibenegge verlaufende und vorzugsweise zueinander verschiebbare Trägerbalken 11 angeordnet. An jedem Trägerbalken 11 ist eine Vielzahl von Armen 12 mittels einer sogenannten Gummilagerung federnd gelagert angeordnet. Somit ist eine elastische Anordnung und Lagerung 12 der Arme 13 an den Trägerbalken 11 geschaffen. An dem der Gummilagerung 12 entgegengesetzten Enden der Arme 13 sind schräg zur Fahrtrichtung 6 angestellte Scheiben zur Bodenbearbeitung in bekannter und 3 nicht näher dargestellter Weise frei drehbar gelagert. Die Scheiben 14 in der vorderen Querreihe sind entgegengesetzt schräg zu den Scheiben 14 in der hinteren Querreihe angestellt.

Hinter den als den Boden lockernden Bodenbearbeitungswerkzeugen ausgebildeten Scheiben 14 sind die Walzenelemente 15 mit entsprechenden Tragarmen in höhenverstellbarer Weise gegenüber den Scheiben 14 zum Verdichten des von den Scheiben 14 gelockerten Bodens in bekannter und daher nicht näher dargestellter und erläuternder Weise angeordnet.

Am hinteren Ende des Zentralrahmens 1 ist das mittels zumindest eines Hydraulikzylinders verschwenkbare Fahrwerk 16 angeordnet. In der in Fig.1 dargestellten Arbeitsstellung des Bodenbearbeitungsgerätes ist das Fahrwerk 16 ausgehoben und befindet sich oberhalb des Zentralrahmens 1 in verschwenkter Weise. Dieses Fahrwerk 16 lässt sich, wenn die Scheibenegge in Transportstellung gemäß Fig.2 gebracht wird, in eine Position nach hinten schwenken, so dass die Werkzeuge 14 und 15 des Bodenbearbeitungsgerätes vom Boden abgehoben werden und das Gerät mittels des Fahrwerks 16 entsprechend transportiert werden kann. Auf der Vorderseite der Zugdeichsel 2 befindet sich die Zugkupplung 10, mit welcher das Gerät an eine Zugvorrichtung eines nicht gezeigten Ackerschleppers anzukuppeln ist.

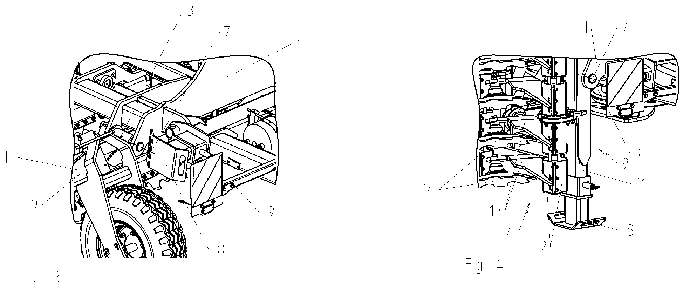

Die in Transportstellung gemäß Fig.2 gebrachte Scheibenegge lässt sich in ihrer Abstellposition auf Abstellstützen 18 abstellen, wie in Fig.2 und 4 gezeigt ist. Hierzu werden die Abstellstützen 18, die in Arbeitsstellung des Gerätes in am Zentralrahmen 1 oder der Zugdeichsel 2 angeordneten Aufbewahrungshalterungen 19 mit dem Gerät mitgeführt werden, aus diesem Aufbewahrungshaltung 19 entnommen und an den unteren Enden der sich in Transportstellung befindlichen Trägerbalken 11 der Seitensektionen 4, 5 mittels nicht näher dargestellter Schnellkupplungen in abnehmbar Weise angeordnet. Wenn in die Abstellstützen 18 an den unteren Enden der sich in Transportstellung befindlichen Trägerbalken 11 angeordnet sind, kann das Gerät, wie in Fig.2 und 4 gezeigt, auf den Abstellstützen 18 abgestellt werden.

Wenn das Gerät aus der in den Fig.2 und 4 dargestellte Transportstellung in die in der Fig.1 dargestellten Arbeitsstellung verbracht werden soll, werden vor dem Verschwenken der Seitensektionen 4, 5 aus der Transportstellung in die Arbeitsstellung die Abstellstützen 18 von den unteren Enden der Trägerbalken 11 abgenommen und in die Aufbewahrungshalterung 19 verbracht.

## Patentansprüche

1. Landwirtschaftliches Gerät, insbesondere Bodenbearbeitungsgerät, mit einem Tragrahmen (1) an den um in Fahrtrichtung weisende Gelenkachsen (6) aus einer etwa horizontalen Arbeitsstellung (Fig.1) in eine etwa vertikale Transportstellung verschwenkbare Trägerbalken (11) ausgebildete Seitensektionen (4, 5) angeordnet sind, wobei an den Trägerbalken (11) Bearbeitungselemente (14, angeordnet sind, wobei Abstellstützen (18) zum Abstellen der Maschine, wenn die Trägerbalken (11) sich in Transportstellung befinden, vorgesehen sind, **dadurch gekennzeichnet, dass** zumindest eine Abstellstütze (18) an dem unteren Ende eines sich in Transportstellung befindlichen Trägerbalkens (11) anordbar ist.

2. Landwirtschaftliches Gerät nach Anspruch 1, **dadurch gekennzeichnet, dass** die an dem unteren Ende des sich in Transportstellung befindlichen Trägerbalken (11) anzuordnende Abstellstütze (18) mittels einer Schnellkupplung in abnehmbar Weise angeordnet ist.

3. Landwirtschaftliches Gerät nach einem der vorstehenden Ansprüche, **dadurch gekennzeichnet, dass** an dem Tragrahmen (1) eine Halterung (19) angeordnet ist, an welcher die Abstellstütze (18) bei sich in Arbeitsstellung befindlichen Trägerbalken (11) befestigbar ist.

## Claims

1. Agricultural device, in particular soil-cultivating device, with a supporting frame (1) on which carrier bars (11) designed side sections (4, 5) which are pivotable about axes of articulation (6), which point in the direction of travel, from an approximately horizontal working position (Fig. 1) into an approximately vertical transport position are arranged, wherein cultivating elements (14, are arranged on the carrier bars (11), wherein set-down legs (18) are provided for setting down the machine when the carrier bars (11) are in the transport position, **characterized in that** at least one set-down leg (18) can be arranged at the lower end of a carrier bar (11) which is in the transport position.

2. Agricultural device according to Claim 1, **characterized in that** the set-down leg (18) which is to be arranged at the lower end of the carrier bar (11) which is in the transport position is arranged in a removable manner by means of a rapid-action coupling.

3. Agricultural device according to either of the preceding claims, **characterized in that** a holder (19) to which the set-down leg (8) can be fastened when the carrier bar (11) is in the working position is arranged on the supporting frame (1).

## Revendications

1. Appareil agricole, en particulier appareil de travail du sol, comprenant un châssis porteur (1), sur lequel sont disposées des poutres de support (11) réalisées sections latérales (4, 5) pouvant pivoter autour d'axes d'articulation (6) orientés dans la direction de conduite d'une position de travail approximativement horizontale (fig. 1) dans une position de transport approximativement verticale, des éléments de traitement (14, étant disposés sur les poutres de support (11), des pieds de support (18) étant prévus pour supporter la machine lorsque les poutres de support (11) se trouvent dans la position de transport, **caractérisé en ce qu'**au moins un pied de support (18) peut être disposé à l'extrémité inférieure d'une poutre de support (11) se trouvant dans une position de transport.

2. Appareil agricole selon la revendication 1, **caractérisé en ce que** le pied de support (18) devant être disposé à l'extrémité inférieure de la poutre de support (11) se trouvant dans la position de transport est disposé de manière amovible au moyen d'un raccord rapide.

3. Appareil agricole selon l'une quelconque des revendications précédentes, **caractérisé en ce qu'**une fixation (19) est disposée sur le cadre de support (1), à laquelle peut être fixé le pied de support (18) lorsque la poutre de support (11) se trouve dans la position de travail.
